# FASCICULE DE BREVET EUROPEEN

(11) **EP 1 728 411 B1**
(45) Date de publication et mention de la délivrance du brevet: **24.02.2010**
(21) Numéro de dépôt: 05739587.3
(22) Date de dépôt: 18.03.2005
(51) Int. Cl.: H05B 6/02, B29C 33/06

(54) **PROCEDE POUR CHAUFFER DES MATERIAUX EN VUE DE PRODUIRE DES OBJETS ET DISPOSITIF METTANT EN OEUVRE CE PROCEDE**
VERFAHREN ZUM ERWÄRMEN VON MATERIALIEN ZUR HERSTELLUNG VON OBJEKTEN UND EINRICHTUNG ZUR IMPLEMENTIERUNG DES VERFAHRENS
METHOD OF HEATING MATERIALS IN ORDER TO PRODUCE OBJECTS AND DEVICE FOR IMPLEMENTING SAID METHOD

(30) Priorité: 18.03.2004 FR 0450541
(43) Date de publication de la demande: 06.12.2006
(73) Titulaire: Roctool, 73370 Le Bourget du Lac (FR)
(72) Inventeur: FEIGENBLUM, José, F-38000 Grenoble (FR); LEGEROT, Gérard, F-73100 Aix Les Bains (FR); GUICHARD, Alexandre, F-73310 La Chapelle Du Mont Du Chat (FR)
(74) Mandataire: Grynwald, Albert
(86) Numéro de dépôt international: PCT/FR2005/050176
(87) Numéro de publication internationale: WO 2005/094127

(56) Documents cités:
- FR-A- 2 816 237
- US-A- 5 808 281

## Description

La présente invention se rapporte à un procédé pour chauffer des matériaux en vue de produire des objets et à un dispositif mettant en oeuvre un tel procédé.

La production d'objets de manière industrielle, notamment en masse, est une opération d'une importance croissante qui concerne l'ensemble des domaines d'activité économique tels que, par exemple, les domaines de l'automobile, de l'aérospatial, de l'aéronautique, de l'acoustique, de l'ameublement et du sanitaire, du bâtiment et des travaux publics, de la santé ou encore dans le domaine des objets grands publics tels que des bagages ou des jouets.

D'une façon générale, quasi toute activité industrielle ou de services requiert la mise en oeuvre d'objets qui, bien qu'étant spécifiques à cette activité, doivent être générés en grand nombre, de préférence avec des coûts limités.

Par ailleurs, la production de tels objets peut mettre en oeuvre des opérations de natures aussi diverses et variées que, par exemple, des opérations de mise en forme, de moulage, de surmoulage, de consolidation locale, d'insérage, d'assemblable, de soudage, de découpe, de protection ou recouvrement (« coating » en anglais) ou de décoration.

Finalement, une telle production doit pouvoir prendre en compte des matériaux aussi divers que des composés thermoplastiques, des composés thermodurcissables, des composés cellulaires, des élastomères et/ou des composés vulcanisables, du verre ou des alliages légers, et présentant, par exemple, un renforcement par fibres (verre, carbone, naturelles...) et/ou une structure en sandwiches et/ou en nids d'abeilles.

Pour limiter les coûts d'investissement et d'exploitation d'une production en grand nombre d'objets, il est opportun d'utiliser un procédé de production mettant en oeuvre des phénomènes d'induction électromagnétique pour chauffer des matériaux en vue ou non de leur moulage.

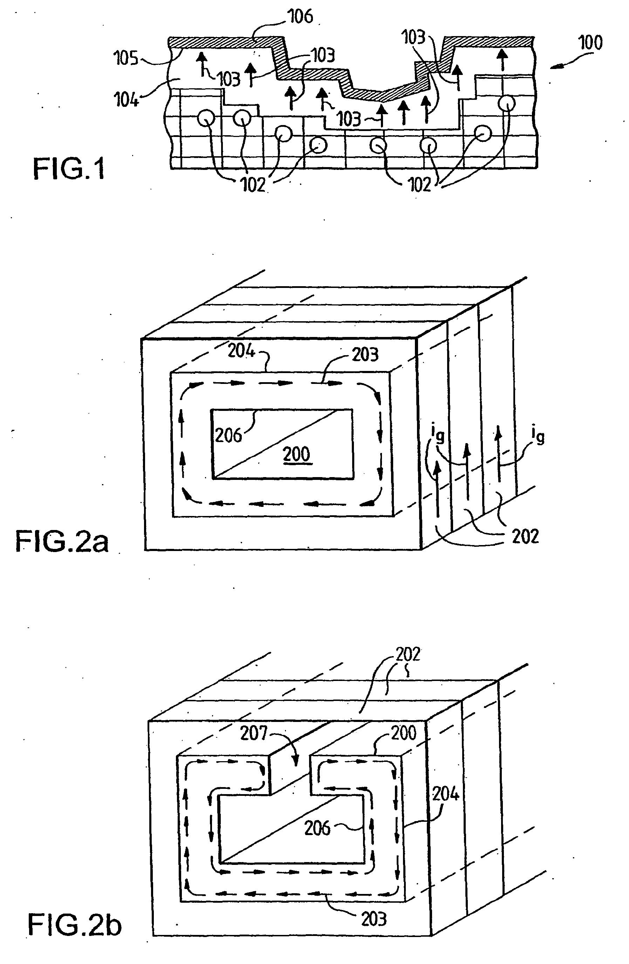

Selon un tel procédé, un dispositif 100 (figure 1) de moulage comprend des inducteurs 102 transmettant un courant électrique qui génère un champ magnétique (non représenté) tel que des courants de Foucault se propagent dans un élément conducteur, comme un métal, 104 situé au voisinage des inducteurs 102.

Ces courants de Foucault provoquent un échauffement de l'élément conducteur 104 qui transmet sa chaleur, par conduction, vers un matériau 106 à mouler posé sur sa surface 105.

Cette conduction, ou transfert de chaleur, représenté par des flèches 103 sur la figure 1, permet alors de porter le matériau 106 à la température souhaitée pour effectuer son moulage.

La présente invention résulte de la constatation qu'un procédé selon l'art antérieur, tel que décrit à l'aide de la figure 1, présente de nombreux inconvénients.

De fait, un tel procédé requiert le chauffage de l'ensemble de l'élément conducteur 104 alors même que seule sa surface 105, en contact avec le matériau 106 à mouler, requiert une élévation de température.

En d'autres termes, la quantité d'énergie devant être fournie pour l'élévation de température du matériau 106 est accrue par la quantité d'énergie à fournir pour élever la température de l'ensemble de l'élément conducteur 104, ce qui augmente le coût du procédé.

Par ailleurs, un autre problème réside dans le manque d'homogénéité du chauffage de la surface 105 puisque, en fonction de la proximité de cette surface des inducteurs, sa température varie.

Dès lors, la surface 105 présente des gradients de température provoquant des échauffements hétérogènes du matériau 106 pouvant provoquer des malformations de l'objet produit.

Ces malformations peuvent se présenter sous la forme d'irrégularités de la surface du matériau 106 après chauffage, provoquant des contraintes internes dans ce matériau et, par conséquent, des risques de rupture ou de déformations du matériau.

Un autre inconvénient d'un procédé selon l'art antérieur réside dans la nécessité d'une approche empirique pour sa réalisation. De fait, en fonction de la forme du matériau à chauffer, la forme de l'élément conducteur doit être adaptée, modifiant ainsi ses caractéristiques de conductions.

Dès lors, pour chaque forme de matériau 106 à mouler, il est nécessaire de réaliser des essais permettant de déterminer la disposition optimale des inducteurs dans le dispositif de chauffage, sans que cette disposition permette un chauffage homogène comme précédemment indiqué.

Selon un autre inconvénient, un procédé connu met en oeuvre des cycles thermiques (chauffage/refroidissement) de durées importantes, généralement de plusieurs heures, étant donné que l'inertie thermique d'un matériau conducteur tel qu'un métal est importante.

La grande durée des cycles thermiques est aussi due au fait que l'épaisseur d'un élément conducteur 104 est importante pour permettre la réalisation de différentes formes de surface à partir d'un même élément conducteur, ces différentes formes correspondant aux formes des objets à produire, mâles et/ou femelles.

Il est connu, par le document US-A-5 808 281, un dispositif pour chauffer des matériaux comprenant des générateurs de courants électriques alimentant des inducteurs et engendrant des champs électromagnétiques, et des moyens pour appliquer ces champs électromagnétiques à deux éléments en vis-à-vis, tous deux en matériau électriquement conducteur, au moins un élément comportant une face constituant une zone chauffante, les moyens inducteurs entourant les deux éléments.

Pour remédier à au moins un de ces inconvénients, la présente invention concerne un procédé pour chauffer des matériaux en vue de produire des objets de manière industrielle, notamment en masse, en limitant les coûts d'investissement et les coûts d'exploitation, en permettant une grande variété de procédés de transformation ; ledit procédé comprenant les étapes suivantes :
- l'étape de générer des champs électromagnétiques au moyen d'inducteurs parcourus par des courants électriques d'intensité et de fréquence appropriées,
- l'étape d'appliquer lesdits champs électromagnétiques à au moins une partie d'au moins un élément intermédiaire, comportant une face interne et une face externe, située entre lesdits inducteurs et lesdits matériaux à chauffer,
- lesdits inducteurs et ledit élément intermédiaire étant conformés de telle sorte que les courants électriques induits dans ledit élément intermédiaire par lesdits champs électromagnétiques circulent à la surface d'au moins une zone dite chauffante desdites faces externes et internes, ladite zone chauffante étant destinée à être à l'interface avec les matériaux à chauffer,
- l'une des parties de chaque élément intermédiaire incluant ladite zone chauffante étant réalisée en un matériau ayant une perméabilité magnétique et/ou une résistivité électrique différente de celle du reste de l'élément intermédiaire.

Grâce à un procédé conforme à l'invention, l'élévation de température requis pour la production d'un objet peut être limitée à la seule surface de l'élément intermédiaire, servant de support du matériau à chauffer, et à ce matériau, de telle sorte que ce procédé de chauffage requiert une consommation énergétique moindre par rapport à un procédé selon l'art antérieur. On note qu'il pourrait également être envisagé d'utiliser un élément intermédiaire constitué d'un seul matériau.

De plus, l'élévation de température de la surface de l'élément intermédiaire n'est pas exclusivement liée à la diffusivité thermique de l'élément intermédiaire ce qui augmente la reproductibilité et la fiabilité du procédé.

Un tel procédé présente également l'avantage de permettre une circulation de courant qui améliore l'homogénéité de l'échauffement sur l'ensemble de la surface de l'élément intermédiaire de telle sorte que l'échauffement des matériaux au contact de cet élément intermédiaire s'effectue de façon toute aussi homogène, permettant de limiter la présence de contraintes internes dans ce matériau.

Un autre avantage de l'invention réside dans le fait qu'elle permet d'obtenir différentes températures, à la surface de l'élément intermédiaire, en associant des sous-parties de natures (résistivité électrique, perméabilité magnétique et à un niveau moindre la diffusivité thermique) distinctes, la température de chacune de ces sous-parties étant homogène.

L'invention présente aussi l'avantage de réduire fortement les durées des cycles thermiques (chauffage/refroidissement) puisque la masse chauffée est limitée en épaisseur, ce qui permet de chauffer un plus grand nombre de matériaux en un temps donné.

Selon un autre avantage de l'invention, il apparaît qu'une même structure d'inducteurs peut être utilisé indépendamment de la forme du matériau à chauffer. En d'autres termes, un même dispositif peut être utilisé pour chauffer différentes formes de matériaux, ce qui simplifie son utilisation tout en réduisant le coût de chaque opération de chauffage puisque des essais préalables visant à déterminer la structure optimale des inducteurs ne sont pas nécessaires.

Dans un mode de réalisation, ledit procédé comprend en outre l'étape de ménager une coupure électrique isolante dans ledit élément intermédiaire de telle sorte que les courants électriques induits dans ledit élément intermédiaire par lesdits champs électromagnétiques circulent à la surface desdites faces externes et internes.

Selon un mode de réalisation, ladite coupure permet de segmenter l'élément intermédiaire en deux sous-éléments, au moins un de ces sous-éléments comprenant une zone chauffante constituée par les parties de l'élément intermédiaire ayant une perméabilité magnétique et/ou une résistivité électrique spécifiques.

Dans un mode de réalisation, l'élément intermédiaire comporte deux sous-éléments mobiles l'un par rapport à l'autre.

Selon une variante, le procédé est décomposé en une première phase où lesdits inducteurs et ledit élément intermédiaire sont conformés de telle sorte que les courants électriques induits dans ledit élément intermédiaire par lesdits champs électromagnétiques circulent à la surface d'au moins une zone dite chauffante desdites faces externes et internes, ladite zone chauffante étant destiné à être à l'interface avec les matériaux à chauffer, suivi d'une seconde phase où, après mise en contact des deux sous-éléments mobiles de manière à fermer hermétiquement un espace et injection des matériaux à chauffer dans ledit espace, lesdits inducteurs et ledit élément intermédiaire sont conformés de telle sorte que les courants électriques induits dans ledit élément intermédiaire par lesdits champs électromagnétiques circulent à la surface de la face externe continuant à chauffer la zone chauffante par conduction.

Selon un mode de réalisation, lesdits inducteurs sont composés de parties enfichables entourant lesdits éléments intermédiaires.

Dans un mode de réalisation, ladite partie de chaque élément intermédiaire ayant une perméabilité magnétique et/ou une résistivité électrique différente de celle du reste de l'élément intermédiaire comprend un composé magnétique présentant une température de Curie voisine de la température du matériau à chauffer, par exemple comprenant du Nickel, du Crome et/ou du Titane.

Selon un mode de réalisation, l'élément intermédiaire comprend un matériau présentant peu d'échauffement sous l'effet des courants de Foucault.

Dans une réalisation, l'interface de la zone chauffante avec les matériaux à chauffer est réalisée par contact. La zone chauffante peut être revêtue d'un dépôt de matériau isolant.

Dans une variante, la zone chauffante étant rayonnante, l'interface de la zone chauffante avec les matériaux à chauffer est réalisée par mise à proximité des matériaux à chauffer.

La présente invention concerne aussi un dispositif pour chauffer des matériaux en vue de produire des objets de manière industrielle, notamment en masse, en limitant les coûts d'investissement et les coûts d'exploitation, en permettant une grande variété de procédés de transformation ; ledit dispositif comprenant:
- des générateurs de courants électriques, d'intensité et de fréquence appropriées, alimentant des inducteurs et engendrant des champs électromagnétiques,
- des moyens pour appliquer lesdits champs électromagnétiques à au moins une partie d'au moins un élément intermédiaire, comportant une face interne et une face externe, située entre lesdits inducteurs et lesdits matériaux à chauffer,
- lesdits inducteurs et ledit élément intermédiaire étant conformés de telle sorte que les courants électriques induits dans ledit élément intermédiaire par lesdits champs électromagnétiques circulent à la surface d'au moins une zone chauffante d'une desdites faces externes et internes, ladite zone chauffante étant destinée à être à l'interface avec les matériaux à chauffer,
- l'une des parties de chaque élément intermédiaire incluant ladite zone chauffante étant réalisée en un matériau ayant une perméabilité magnétique et/ou une résistivité électrique différente de celle du reste de l'élément intermédiaire.

Dans un mode de réalisation, ledit dispositif comprend en outre une coupure électrique isolante dans ledit élément intermédiaire de telle sorte que les courants électriques induits dans ledit élément intermédiaire par lesdits champs électromagnétiques circulent à la surface d'au moins une desdites faces externes et internes.

Selon un mode de réalisation, ladite coupure permet de segmenter l'élément intermédiaire en deux sous-éléments, au moins un de ces sous-éléments comprend une zone chauffante constituée par les parties de l'élément intermédiaire ayant une perméabilité magnétique et/ou une résistivité électrique spécifiques. Dans un mode de réalisation, l'élément intermédiaire comporte deux sous-éléments mobiles l'un par rapport à l'autre.

Selon un mode de réalisation, lesdits inducteurs sont composés de parties enfichables entourant lesdits éléments intermédiaires.

Dans un mode de réalisation, ladite partie de chaque élément intermédiaire ayant une perméabilité magnétique et/ou une résistivité électrique différente de celle du reste de l'élément intermédiaire comprend un composé magnétique présentant une température de Curie, par exemple comprenant du Nickel, du Crome et/ou du Titane.

Selon un mode de réalisation, l'élément intermédiaire comprenant un matériau présentant peu d'échauffement sous l'effet des courants de Foucault.

Dans une réalisation, l'interface de la zone chauffante avec les matériaux à chauffer est réalisée par contact. La zone chauffante peut être revêtue d'un dépôt de matériau isolant.

Dans une variante, la zone chauffante étant rayonnante, l'interface de la zone chauffante avec les matériaux à chauffer est réalisée par mise à proximité des matériaux à chauffer.

L'invention concerne aussi un moule pour chauffer des matériaux en vue de produire des objets de manière industrielle, notamment en masse, en limitant les coûts d'investissement et les coûts d'exploitation, en permettant une grande variété de procédés de transformation ; ledit moule comprenant:
- des générateurs de courants électriques, d'intensité et de fréquence appropriées, alimentant des inducteurs et engendrant des champs électromagnétiques,
- des moyens pour appliquer lesdits champs électromagnétiques à au moins une partie d'au moins un élément intermédiaire, comportant une face interne et une face externe, située entre lesdits inducteurs et lesdits matériaux à chauffer,
- lesdits inducteurs et ledit élément intermédiaire étant tel que les courants électriques induits dans ledit élément intermédiaire par lesdits champs électromagnétiques circulent à la surface d'une desdites faces externes et internes,
- l'une des parties de chaque élément intermédiaire étant en un matériau ayant une perméabilité magnétique et/ou une résistivité électrique différente de celle du reste de l'élément intermédiaire.

Dans un mode de réalisation, ledit moule comprend en outre une coupure électrique isolante dans ledit élément intermédiaire de telle sorte que les courants électriques induits dans ledit élément intermédiaire par lesdits champs électromagnétiques circulent à la surface desdites faces externes et internes.

Selon un mode de réalisation, ladite coupure permet de segmenter l'élément intermédiaire en deux sous-éléments, au moins un de ces sous-éléments comprend une zone chauffante constituée par les parties de l'élément intermédiaire ayant une perméabilité magnétique et/ou une résistivité électrique spécifiques.

Dans un mode de réalisation, l'élément intermédiaire comporte deux sous-éléments mobiles l'un par rapport à l'autre.

Selon un mode de réalisation, lesdits inducteurs sont composés de parties enfichables entourant lesdits éléments intermédiaires.

Selon un mode de réalisation, ladite partie de chaque élément intermédiaire a une perméabilité magnétique et/ou une résistivité électrique différente de celle du reste de l'élément intermédiaire comprenant un composé magnétique présentant une température de Curie, par exemple comprenant du Nickel, du Crome et/ou du Titane.

Selon un mode de réalisation, l'élément intermédiaire comprend un matériau présentant peu d'échauffement sous l'effet des courants de Foucault.

Dans une réalisation, l'interface de la zone chauffante avec les matériaux à chauffer est réalisée par contact. La zone chauffante peut être revêtue d'un dépôt de matériau isolant.

Dans une variante, la zone chauffante étant rayonnante, l'interface de la zone chauffante avec les matériaux à chauffer est réalisée par mise à proximité des matériaux à chauffer.

L'invention concerne aussi une partie d'un élément intermédiaire mis en oeuvre dans un procédé selon l'une des réalisations précédentes, dans un dispositif selon l'une des réalisations précédentes ou dans un moule selon l'une des réalisations précédentes, cette partie étant composée d'un matériau ayant une perméabilité magnétique et/ou une résistivité électrique différente de celle du reste de l'élément intermédiaire.

Finalement, l'invention concerne aussi un objet produit par échauffement de matériaux de manière industrielle, notamment en masse, en limitant les coûts d'investissement et les coûts d'exploitation, en permettant une grande variété de procédés de transformation ; ledit objet étant obtenu par un procédé selon l'une des réalisations précédentes, par un dispositif selon l'une des réalisations précédentes et/ou par un moule selon l'une des réalisations précédentes.

D'autres caractéristiques et avantages de l'invention apparaîtront avec la description de réalisations de cette invention effectuée ci-dessous, à titre illustratif et non limitatif, en faisant référence aux figures ci-jointes sur lesquelles :
- la figure 1, déjà décrite, représente un procédé de chauffage de matériaux selon l'art antérieur,
- les figures 2a et 2b représentent des schémas de principe de l'invention,
- les figures 3a et 3b représentent des dispositifs selon un premier et un deuxième mode de réalisation de l'invention,
- les figures 3c et 3d représentent une vue détaillée du deuxième mode de réalisation,
- les figures 4a et 4b représentent une vue en perspective et une vue éclatée d'un moule conforme à l'invention, et
- les figures 5a et 5b représentent les deux phases d'une application particulière de l'invention.

Sur la figure 2a est représenté un élément intermédiaire 200 en matériau conducteur, tel qu'un métal, entouré d'inducteurs 202 parcourus par un courant ig pouvant générer des courants 203 de Foucault dans l'élément intermédiaire 200.

Les courants 203 de Foucault se propagent sur la surface 204 extérieure ou 206 intérieure de l'élément intermédiaire 200 en fonction de l'implantation de l'inducteur par rapport à l'élément intermédiaire.

Ainsi, lorsque l'inducteur est situé à l'intérieur, respectivement l'extérieur, de l'élément intermédiaire, les courants de Foucault circulent sur la surface intérieure, respectivement extérieure, de l'élément intermédiaire.

Dans cet exemple, les courants 203 représentés se propagent à la surface 204 extérieure de l'élément intermédiaire 200.

Selon une constatation propre à l'invention, il apparaît alors possible de chauffer directement la surface d'un matériau en disposant ce dernier sur la surface de l'élément intermédiaire 200 parcourue par les courants de Foucault 203, ce matériau étant alors au contact d'une partie de l'élément intermédiaire dont l'échauffement est dû principalement au phénomène de résistivité.

Un tel procédé de chauffage peut être commandé en déterminant les caractéristiques nécessaires des courants 203 de Foucault (tension, intensité) au moyen d'un champ magnétique généré par les inducteurs de caractéristiques adaptées, et notamment de fréquence adaptée, il est possible de déterminer l'épaisseur sur laquelle le courant circule à la surface de l'élément intermédiaire.

Selon une autre constatation propre à l'invention, lorsqu'un entrefer 207 (figure 2b) est situé dans l'élément intermédiaire 200, les courants 203 de Foucault se propagent le long des surfaces internes et externes de cet élément intermédiaire de façon à former un circuit fermé.

La présence de cet entrefer 207 permet de chauffer un matériau sur chacune des surfaces de l'élément intermédiaire, comme décrit ci-dessous.

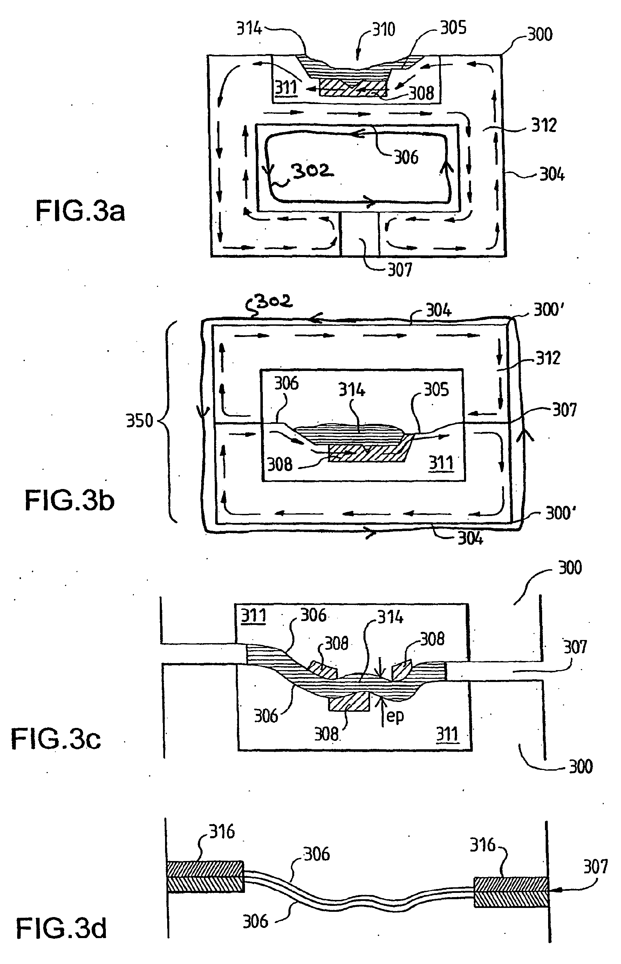

Dans une réalisation de l'invention (figure 3a), un moule 310 est conçu de telle sorte que le matériau à chauffer est situé sur une surface extérieure 304,305 de l'élément intermédiaire 300 considéré.

Des inducteurs 302 génèrent des champs magnétiques induisant des courants de Foucault représentés par des flèches. Par exemple et ainsi que représentés sur la figure, ces inducteurs sont internes à l'élément intermédiaire. Cette variante présente l'avantage de permettre un positionnement rapide du matériau à chauffer sur cette surface 304,305.

Par ailleurs, il convient de noter que, pour des raisons de clarté, les inducteurs propres à l'élément intermédiaire 300 ne sont pas représentés sur les figures 3c et 3d, détaillées ultérieurement.

Par ailleurs, dans cette réalisation, l'entrefer 307 est généré par un isolant électrique tel que, par exemple, un composé céramique, thermoplastique ou thermodurcissable, qui permet de prévenir des éventuelles décharges électriques au niveau de l'entrefer 307.

La surface 305 de la partie chauffante 311, destinée à être en contact avec le matériau 314 à chauffer, présente une partie 308 magnétique à « point de Curie » de telle sorte que la température de cette partie 308 est limitée par la température de Curie, choisie en fonction du matériau à chauffer. La partie magnétique à point de Curie peut se substituer dans sa totalité ou en partie à l'élément intermédiaire.

En d'autres termes, grâce à l'utilisation d'un tel matériau à point de Curie, la température de la surface de la partie 308 peut être maintenue à une température donnée, distincte du reste de la surface 305, ce qui permet une régulation automatique de la puissance fournie.

Par ailleurs, la partie 312 du moule n'étant pas destinée à être au contact avec le matériau 314 à chauffer est composé d'un alliage amagnétique, comme par exemple de l'aluminium ou un acier inoxydable du type 304, 304L, 316 qui présente peu d'échauffement malgré la présence de courants de Foucault, permettant ainsi de limiter fortement l'échauffement du sous-élément 312.

Comme précédemment mentionné dans les avantages de l'invention, il apparaît qu'un dispositif ou système conforme à l'invention permet de chauffer la surface en contact avec le matériau avec des délais fortement inférieurs aux délais requis par un procédé selon l'art antérieur.

Selon un exemple concret, une température de 250°C peut être atteinte en quelques secondes tandis que, dans un procédé selon l'art antérieur, ce délai est forcément supérieur car l'injection d'énergie ne s'effectue jamais à l'interface moule/matière.

Selon une seconde réalisation préférée de l'invention, décrite à l'aide de la figure 3b, la surface de chauffage correspond à la surface 306 située à l'intérieur de l'élément intermédiaire 350 ce qui permet, notamment, d'exercer des pressions mécaniques fortes sur le matériau 314 chauffé. Les inducteurs 302 permettent la génération de courants de Foucault dans l'élément intermédiaire.

Cette réalisation met en oeuvre deux sous-éléments intermédiaires 300', en vis-à-vis, ce qui présente l'avantage de permettre d'utiliser le matériau chauffé pour définir un entrefer au niveau de chacun de ces sous-éléments intermédiaires, comme montré sur la figure 3c qui est un détail de la figure 3b sur laquelle sont représentées les surfaces internes 306 de chaque sous-élément 300' intermédiaire ainsi que la matériau 314 à chauffer.

Il apparaît alors que, dans ce cas, l'épaisseur du matériau à chauffer définit l'épaisseur de l'entrefer tandis que, dans une variante représentée sur la figure 3d, l'épaisseur de l'entrefer est déterminée par des butées 316, transparentes aux champs, ce qui permet de générer des objets d'épaisseur prédéterminée.

Comme le matériau à mouler est en contact sur chacune de ses faces avec une surface de l'outillage appelée la zone moulante ou chauffante, une circulation de courant électrique est générée sur les deux surfaces moulantes. Dans le cas de la transformation de matériaux composites conducteurs électriques (à base de fibres de carbone par exemple...) le matériau peut provoquer un court-circuit entre les deux circulations de courant, générant ainsi localement une dégradation du matériau.

Pour éviter l'apparition de ce phénomène, il est proposé de réaliser sur au moins une des deux zones moulantes un dépôt isolant électrique. Sa composition peut être variée, avec des matériaux de type téflon, peek, carbone amorphe, fibre de verre... Les principales propriétés de ce dépôt sont :
- Tenue en température; au moins égale à la température de transformation du matériau à mouler,
- Tenue mécanique; au moins égale à la pression de transformation du matériau à mouler,
- Isolation électrique
- Dépôt fin (quelques µm)
- Procédé de dépôt industriel compatible avec les alliages constituant les zones moulantes,
- ...

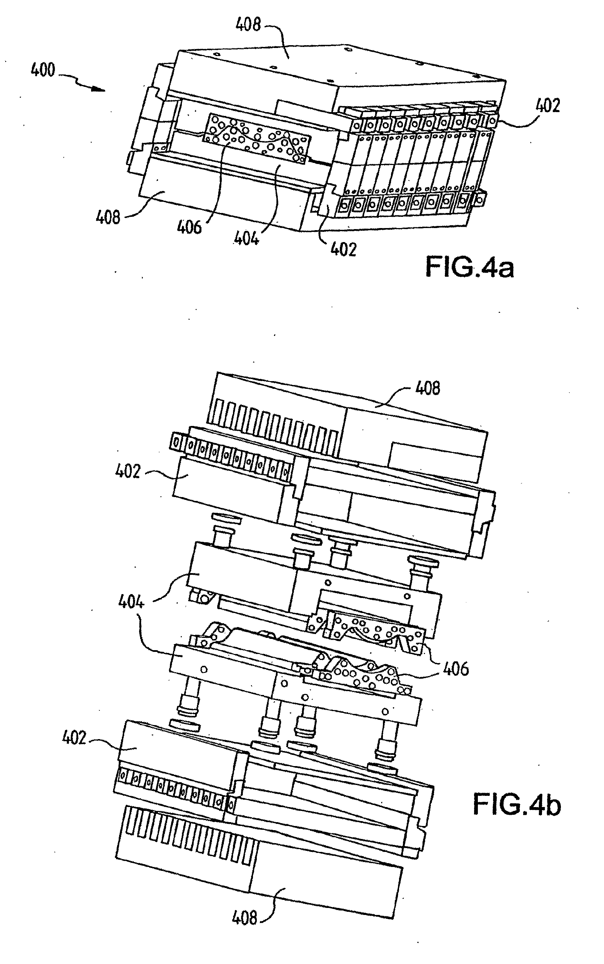

La figure 4a représente une vue en perspective d'un moule conforme au second mode de réalisation décrit à l'aide de la figure 3b, tandis que la figure 4b représente une vue éclatée de ce moule 400 en perspective.

Ainsi, sur la figure 4a sont visibles les inducteurs 402 qui entourent une carcasse 404 de conception standard dans laquelle est située la partie 406 du moule venant au contact avec le matériau à chauffer (non représenté).

Sur la figure 4b, la vue éclatée du moule 400 permet de montrer la structure amovible des inducteurs 402 et des organes de pression 408 permettant de soumettre le matériau à chauffer à une pression élevée tout en maintenant les inducteurs.

Il convient de noter que, afin de ne pas perturber les inducteurs 402, les organes 408 de pression sont en composé transparent aux champs.

L'invention peut être étendue à diverses applications dont deux sont présentées ci-après.

Le principe électromagnétique selon l'invention peut être utilisé pour un chauffage du matériau à transformer par rayonnement. Le principe électromagnétique est identique mais la circulation des courants de Foucault à comme objectif de faire échauffer des éléments en graphite. Portés à haute température (jusqu'à ∼1000°C), ces éléments en graphite chauffent par rayonnement le matériau composite situé dans l'entrefer entre les éléments en graphite, sans contact.

Ce procédé pourrait se substituer aux procédés classiques de chauffe par infrarouge, par exemple dans les procédés de fabrication de tubes et de réservoirs par enroulement filamentaire sur un rouleau tournant ou dans les procédés de fabrication de pare-brises par gravité sur des moules convexes, ou encore pour la préchauffe de matériaux avant leur transformation.

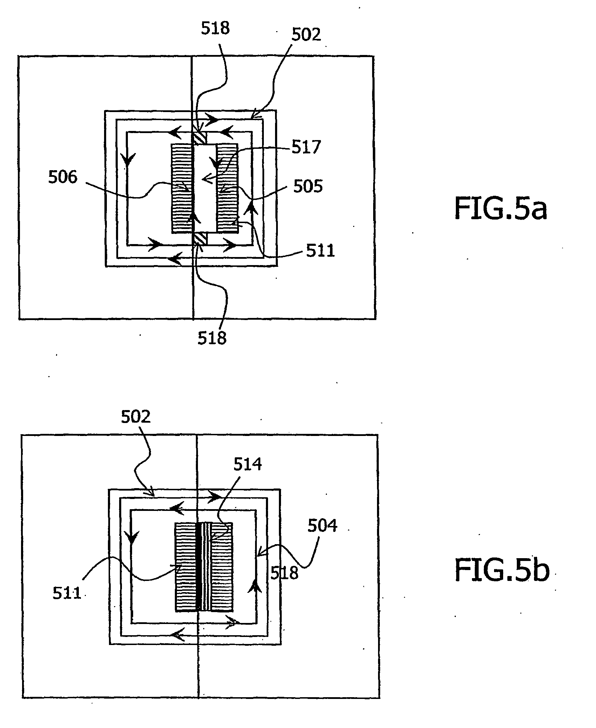

Le principe selon l'invention peut également être utilisé pour une chauffe en masse de l'outillage. Cependant, dans le cas de l'injection (de thermoplastiques ou de thermodurcissables) les pressions sont telles que l'outillage doit être fermé. Il est alors proposer de chauffer en deux phases :
Une première phase, illustrée sur la figure 5a, où L'on procède à un chauffage surfacique de l'outillage par le procédé décrit dans le brevet actuel, généré grâce à la présence d'un entrefer 517 pouvant être réalisé grâce à une ou des cales 518 transparente(s) aux champs. Dans cette phase, l'entrefer généré a la faculté de permettre la circulation de courant sur chaque surface moulante 505, 506 des deux parties de L'outillage. Pour accentuer l'effet de chauffe en surface, il est utilisé un courant HF. La chauffe se fait à vide, pendant un temps très court de l'ordre de quelques secondes. Les zones moulantes 511 sont en matériau magnétique alors que le reste de l'élément intermédiaire est en matériau amagnétique, de même que la partie externe qui est située au-delà de l'inducteur 502 avantageusement noyé dans un isolant électrique, ladite partie externe jouant un rôle de renfort mécanique pour lutter contre les pressions élevées de l'injection.
Une deuxième phase, illustrée sur la figure 5b, où l'on procède à un chauffage volumique ou en masse de l'outillage en obstruant l'entrefer précédent. L'outillage est alors fermé lors de la phase d'injection de matière 514. Les courants ne peuvent alors circuler que sur la périphérie 504 de l'outillage. Pour maintenir l'effet de chauffe initié lors de la première phase, on applique dans ce cas une circulation de courant basse fréquence (BF) pour accentuer l'effet d'épaisseur de peau et ainsi parvenir à chauffer au coeur de l'outillage.

Le principe est réalisé, par exemple avec deux inducteurs imbriqués l'un dans l'autre, alimentés par le même générateur qui délivre soit des courants HF, soit des courants BF.

## Revendications

1. Procédé pour chauffer des matériaux (314) en vue de produire des objets ; ledit procédé comprenant les étapes suivantes :
- l'étape de générer des champs électromagnétiques au moyen d'inducteurs (302, 402) parcourus par des courants électriques d'intensité et de fréquence appropriées,
- l'étape d'appliquer les champs électromagnétiques à deux éléments (300') en vis-à-vis, tous deux en matériau électriquement conducteur, au moins un élément (300') comportant une face (306) constituant une zone chauffante , les moyens inducteurs (302, 402) entourant les deux éléments (300'),
**caractérisé en ce qu'**une coupure (307) électrique isolante, ou entrefer, est ménagée entre les éléments (300') de telle sorte que les courants électriques induits par les champs électromagnétiques circulent en circuit fermé dans chaque élément (300'), et notamment à la surface (305) de la zone chauffante, le matériau à chauffer étant disposé au contact ou à proximité de la zone chauffante.

2. Procédé selon la revendication 1, dans lequel la zone chauffante (305) comprend une partie (311) de l'élément (300') correspondant ayant une perméabilité magnétique et/ou une résistivité électrique différente(s) de celle(s) du reste (312) de l'élément (300').

3. Procédé selon la revendication 1 ou 2, dans lequel les deux éléments (300') sont mobiles l'un par rapport à l'autre.

4. Procédé selon la revendication 3 ; le procédé étant décomposé en une première phase où les inducteurs (302) et les éléments (300') sont conformés de telle sorte que les courants électriques induits dans les éléments (300') par les champs électromagnétiques circulent à la surface (305) de la zone chauffante, la zone chauffante étant destinée à être à l'interface avec les matériaux à chauffer, suivi d'une seconde phase où, après mise en contact des deux éléments mobiles de manière à fermer hermétiquement un espace et injection des matériaux à chauffer dans cet espace, la coupure électrique (307) entre les deux éléments n'est plus réalisée.

5. Procédé selon l'une des revendications 1 à 4 ; les inducteurs (302, 402) comprenant des parties amovibles et enfichables pour entourer les deux éléments (300').

6. Procédé selon l'une des revendications précédentes ; dans lequel on prévoit une partie (311) d'au moins un élément (300') ayant une perméabilité magnétique et/ou une résistivité électrique différente(s) de celle(s) du reste (312) de l'élément correspondant (300'), cette partie (311) comprenant un élément (308) réalisé en un composé magnétique présentant une température de Curie, par exemple comprenant du Nickel, du Chrome et/ou du Titane.

7. Procédé selon l'une des revendications précédentes ; dans lequel on prévoit une partie (311) d'au moins un des éléments (300') constituant la zone chauffante, cette partie (311) ayant une perméabilité magnétique et/ou une résistivité électrique différente(s) de celle(s) du reste (312) de l'élément correspondant (300'), le matériau constituant le reste (312) de l'élément (300') correspondant comprenant un matériau amagnétique.

8. Procédé selon l'une des revendications précédentes ; dans lequel l'interface de la zone chauffante avec les matériaux à chauffer est réalisée par contact de façon à réaliser un moulage.

9. Procédé selon la revendication 8 ; dans lequel la zone chauffante est revêtue d'un dépôt de matériau isolant électrique.

10. Procédé selon l'une des revendications 1 à 7 ; dans lequel la zone chauffante est rayonnante, l'interface de la zone chauffante avec le matériau à chauffer étant réalisée par mise à proximité des matériaux à chauffer.

11. Dispositif pour chauffer des matériaux en vue de produire des objets ; le dispositif comprenant:
- des générateurs de courants électriques, d'intensité et de fréquence appropriées, alimentant des inducteurs (302, 402) et engendrant des champs électromagnétiques,
- des moyens pour appliquer les champs électromagnétiques à deux éléments (300') en vis-à-vis, tous deux en un matériau électriquement conducteur, au moins un élément comportant une face (306) constituant une zone chauffante, les moyens inducteurs (302, 402) entourant les deux éléments (300'),
**caractérisé en ce qu'**une coupure (307) électrique isolante, ou entrefer, est ménagée entre les éléments (300') de telle sorte que les courants électriques induits par les champs électromagnétiques circulent en circuit fermé dans chaque élément (300'), et notamment à la surface (305) de la zone chauffante.

12. Dispositif selon la revendication 11 : dans lequel la zone chauffante comprend une partie (311) de l'élément (300') correspondant ayant une perméabilité magnétique et/ou une résistivité électrique différente(s) de celle(s) de l'élément (300') correspondant.

13. Dispositif selon la revendication 11 ou 12 ; dans lequel les deux éléments (300') sont mobiles l'un par rapport à l'autre.

14. Dispositif selon l'une des revendications 11 à 13 ; les inducteurs (202, 402) comprenant des parties amovibles et enfichables pour entourer les deux éléments (300').

15. Dispositif selon l'une des revendications 11 à 14 ; dans lequel au moins un élément (300') comporte une partie (311) ayant une perméabilité magnétique et/ou une résistivité électrique différente(s) de celle(s) du reste (312) de l'élément correspondant ; cette partie (311) comprenant un élément (308) réalisé en un composé magnétique présentant une température de Curie, par exemple comprenant du Nickel, du Chrome et/ou du Titane.

16. Dispositif selon l'une des revendications 11 à 15 ; dans lequel dans lequel au moins un des éléments (300') comporte une partie (311) constituant la zone chauffante, cette partie (311) ayant une perméabilité magnétique et/ou une résistivité électrique différente(s) de celle(s) du reste (312) de l'élément correspondant (300'), le matériau constituant le reste (312) de l'élément (300') comprenant un matériau amagnétique.

17. Dispositif selon l'une des revendications 11 à 16 ; dans lequel l'interface de la zone chauffante avec les matériaux à chauffer est réalisée par contact de façon à réaliser un moulage.

18. Dispositif selon la revendication 17 ; la zone chauffante étant revêtue d'un dépôt de matériau isolant électrique.

19. Dispositif selon l'une des revendications 11 à 16 ; dans lequel la zone chauffante est rayonnante, l'interface de la zone chauffante avec les matériaux à chauffer étant réalisée par mise à proximité des matériaux à chauffer.

## Claims

1. Method for heating materials (314) in order to produce objects, said method comprising the following steps:
- the step of generating electromagnetic fields by means of inductors (302, 402) through which electric currents of a suitable intensity and of a suitable frequency flow,
- the step of applying said electromagnetic fields to two elements (300') located opposite each other, both being made of an electrically conductive material, at least one said element (300') having a face (306) forming a heating zone, said inductor means (302, 402) surrounding said two elements (300'),
**characterized in that** an insulating electric interruption (307) or gap, is arranged between said elements (300') such that the electric currents induced by the electromagnetic fields circulate in a closed circuit in each said element (300'), and especially on the surface (305) of said heating zone, the material to be heated being placed in contact or in proximity to the heating zone.

2. Method in accordance with claim 1, in which said heating zone (305) comprises a part (311) of the corresponding element (300') having a magnetic permeability and/or an electric resistivity different from those of the rest (312) of said element (300').

3. Method in accordance with claim 1 or 2, in which said two elements (300') are mobile in relation to one another.

4. Method in accordance with claim 3, said method being divided into a first phase, during which said inductors (302) and said elements (300') are shaped such that the electric currents induced in said elements (300') by the electromagnetic fields circulate on said surface (305) of said heating zone, said heating zone being intended to be located at the interface with said materials to be heated, followed by a second phase, during which, after the two mobile elements having been brought into contact in order to hermetically close a space and after injection of the materials to be heated into said space, said electric interruption (307) between said two elements is not embodied any longer.

5. Method in accordance with one of the claims 1 through 4, said inductors (302, 402) comprising said detachable and plug-in parts for surrounding said two elements (300').

6. Method in accordance with one of the above claims, in which a part (311) of at least one said element (300') having a magnetic permeability and/or an electric resistivity different from those of the rest (312) of the corresponding element (300') is provided, said part (311) comprising an element (308) made of a magnetic compound having a Curie temperature, containing, for example, Nickel, Chromium and/or Titanium.

7. Method in accordance with one of the above claims, in which a part (311) of at least one of said elements (300') forming said heating zone is provided, said part (311) having a magnetic permeability and/or an electric resistivity different from those of the rest (312) of the corresponding element (300'), the material forming said rest (312) of said corresponding element (300') containing a non-magnetic material.

8. Method in accordance with one of the above claims, in which the interface of said heating zone with said materials to be heated is made by contact in such a way as to carry out molding.

9. Method in accordance with claim 8, in which said heating zone is coated with a layer of an electrically insulating material.

10. Method in accordance with one of the claims 1 through 7, in which said heating zone is radiating, the interface of said heating zone with the material to be heated being made by bringing the materials to be heated into proximity.

11. Device for heating materials in order to produce objects, said device comprising:
- generators of electric currents of a suitable intensity and of a suitable frequency, supplying inductors (302, 402) and generating electromagnetic fields,
- means for applying the electromagnetic fields to two elements (300') located opposite each other, both being made of an electrically conductive material, at least one element comprising a face (306) forming a heating zone, said inductor means (302, 402) surrounding said two elements (300'),
**characterized in that** an insulating electric interruption (307) or gap, is arranged between said elements (300') such that the electric currents induced by the electromagnetic fields circulate in a closed circuit in each said element (300'), and especially on the surface (305) of said heating zone.

12. Device in accordance with claim 11, in which said heating zone comprises a part (311) of the corresponding element (300') having a magnetic permeability and/or an electric resistivity different from those of said corresponding element (300').

13. Device in accordance with claim 11 or 12, in which said two elements (300') are mobile in relation to one another.

14. Device in accordance with one of the claims 11 through 13, said inductors (202, 402) comprising detachable and plug-in parts for surrounding said two elements (300').

15. Device in accordance with one of the claims 11 through 14, in which at least one said element (300') comprises a part (311) having a magnetic permeability and/or an electric resistivity different from those of the rest (312) of the corresponding element, said part (311) comprising an element (308) made of a magnetic compound having a Curie temperature, containing, for example, Nickel, Chromium and/or Titanium.

16. Device in accordance with one of the claims 11 through 15, in which at least one of said elements (300') comprises a part (311) forming said heating zone, said part (311) having a magnetic permeability and/or an electric resistivity different from those of the rest (312) of said element (300') containing a non-magnetic material.

17. Device in accordance with one of the claims 11 through 16, in which the interface of said heating zone with said materials to be heated is made by contact in such a way as to carry out molding.

18. Device in accordance with claim 17, said heating zone being coated with a layer consisting of an electrically insulating material.

19. Device in accordance with one of the claims 11 through 16, in which said heating zone is a radiating zone, the interface of said heating zone with the material to be heated being made by bringing the materials to be heated into proximity.

## Patentansprüche

1. Verfahren zum Erwärmen von Materialien (314) zur Herstellung von Objekten; das besagte Verfahren besteht dabei aus den folgenden Schritten:
- den Schritt zur Generierung von elektromagnetischen Feldern mithilfe von Induktoren (302, 402), durch die elektrische Ströme mit entsprechender Stromstärke und Frequenz fließen,
- den Schritt zur Anwendung der elektromagnetischen Felder auf zwei gegenüber liegende Elemente (300'), die beide aus elektrisch leitenden Materialien bestehen, wobei zumindest ein Element (300') eine Fläche (306) enthält, die eine Heizungszone bildet, und die Induktionsgeräte (302, 304) die beiden Elemente (300') umgeben,
**dadurch gekennzeichnet, dass** zwischen den Elementen (300') eine isolierende Stromunterbrechung, oder ein Luftspalt angelegt ist, sodass die von den elektromagnetischen Feldern induzierten Ströme in einem geschlossenen Kreis in jedem Element (300'), vor allem aber an der Oberfläche (305) der Heizungszone fließen, wobei das zu erwärmende Material in direktem Kontakt oder in der Nähe der Heizungszone angeordnet ist.

2. Verfahren nach Anspruch 1, bei dem die Heizungszone (305) einen Abschnitt (311) des entsprechenden Elements (300') umfasst, der eine unterschiedliche magnetische Durchlässigkeit und/ oder einen unterschiedlichen spezifischen Widerstand gegenüber dem Rest (312) des Elements (300') aufweist.

3. Verfahren nach Anspruch 1 oder 2, bei dem die beiden Elemente (300') zueinander beweglich sind.

4. Verfahren nach Anspruch 3; das Verfahren wird dabei in eine erste Phase zergliedert, in der die Induktoren (302) und die Elemente (300') so in Übereinstimmung gebracht werden, dass die elektrischen Ströme, die von den elektromagnetischen Feldern in den Elementen (300') induziert werden, an der Oberfläche (305) der Heizungszone fließen, wobei die Heizungszone dazu bestimmt ist, die Schnittstelle mit den zu erwärmenden Materialien zu bilden, gefolgt von einer zweiten Phase, bei der, nach der Kontaktaufnahme der beiden beweglichen Elemente zum hermetischen Verschließen eines Raumes und nach dem Einspritzen der zu erwärmenden Materialien in diesen Raum, die Stromunterbrechung (307) zwischen den beiden Elementen nicht mehr durchgeführt wird.

5. Verfahren nach einem der Ansprüche 1 bis 4; die Induktoren (302, 402) enthalten dabei abnehmbare und einsteckbare Abschnitte zum Umgeben der beiden Elemente (300').

6. Verfahren nach einem der vorherigen Ansprüche; dabei ist ein Abschnitt (311) von zumindest einem Element (300') vorgesehen, der eine unterschiedliche magnetische Durchlässigkeit und/ oder einen unterschiedlichen spezifischen Widerstand gegenüber dem Rest (312) des entsprechenden Elements (300') aufweist, wobei dieser Abschnitt (311) ein Element (308) enthält, das aus einer magnetischen Verbindung mit einer Curie-Temperatur besteht, die beispielsweise Nickel, Chrom und/ oder Titan enthält.

7. Verfahren nach einem der vorherigen Ansprüche; dabei ist ein Abschnitt (311) von zumindest einem Element (300') vorgesehen, der die Heizungszone bildet, wobei dieser Abschnitt eine unterschiedliche magnetische Durchlässigkeit und/ oder einen unterschiedlichen spezifischen Widerstand gegenüber dem Rest (312) des entsprechenden Elements (300') aufweist, und das Material, das den Rest (312) des entsprechenden Elements (300') bildet, ein unmagnetisches Material enthält.

8. Verfahren nach einem der vorherigen Ansprüche; dabei wird die Schnittstelle der Heizungszone mit den zu erwärmenden Materialien durch Kontakt zur Herstellung eines Abgusses erzeugt.

9. Verfahren nach Anspruch 8; dabei wird die Heizungszone mit einer Ablagerung eines elektrisch isolierenden Materials überzogen.

10. Verfahren nach einem der Ansprüche 1 bis 7; dabei ist die Heizungszone strahlend, und die Schnittstelle der Heizungszone mit dem zu erwärmenden Material wird durch die Näherungsstellung der zu erwärmenden Materialien erzeugt.

11. Einrichtung zum Erwärmen von Materialien zur Herstellung von Objekten; die Einrichtung enthält dabei:
- Stromgeneratoren mit entsprechender Stromstärke und Frequenz zum Einspeisen der Induktoren (302, 402) und zum Erzeugen der elektromagnetischen Felder,
- Mittel zur Anwendung der elektromagnetischen Felder auf zwei gegenüber liegende Elemente (300'), die beide aus elektrisch leitenden Materialien bestehen, wobei zumindest ein Element (300') eine Fläche (306) aufweist, die eine Heizungszone bildet, und die Induktionsgeräte (302, 304) die beiden Elemente (300') umgeben,
**dadurch gekennzeichnet, dass** zwischen den Elementen (300') eine isolierende Stromunterbrechung, oder ein Luftspalt angelegt ist, sodass die von den elektromagnetischen Feldern induzierten Ströme in einem geschlossenen Kreis in jedem Element (300'), vor allem aber an der Oberfläche (305) der Heizungszone fließen.

12. Einrichtung nach Anspruch 11: dabei umfasst die Heizungszone (305) einen Abschnitt (311) des entsprechenden Elements (300'), der eine unterschiedliche magnetische Durchlässigkeit und/ oder einen unterschiedlichen spezifischen Widerstand gegenüber dem Rest (312) des entsprechenden Elements (300') aufweist.

13. Einrichtung nach Anspruch 11 oder 12; dabei sind die beiden Elemente (300') zueinander beweglich.

14. Einrichtung nach einem der Ansprüche 11 bis 13; die Induktoren (302, 402) enthalten dabei abnehmbare und einsteckbare Abschnitte zum Umgeben der beiden Elemente (300').

15. Einrichtung nach einem der Ansprüche 11 bis 14; dabei enthält zumindest ein Element (300') einen Abschnitt (311), der eine unterschiedliche magnetische Durchlässigkeit und/ oder einen unterschiedlichen spezifischen Widerstand gegenüber dem Rest (312) des entsprechenden Elements (300') aufweist; dieser Abschnitt (311) enthält dabei ein Element (308), das aus einer magnetischen Verbindung mit einer Curie-Temperatur besteht, die beispielsweise Nickel, Chrom und/ oder Titan enthält.

16. Einrichtung nach einem der Ansprüche 11 bis 15; dabei enthält zumindest ein Element (300') einen Abschnitt (311), der die Heizungszone bildet, wobei dieser Abschnitt (311) eine unterschiedliche magnetische Durchlässigkeit und/ oder einen unterschiedlichen spezifischen Widerstand gegenüber dem Rest (312) des entsprechenden Elements (300') aufweist, und das Material, das den Rest (312) des Elements (300') bildet, ein unmagnetisches Material enthält.

17. Einrichtung nach einem der Ansprüche 11 bis 16; dabei wird die Schnittstelle der Heizungszone mit den zu erwärmenden Materialien durch Kontakt zur Herstellung eines Abgusses erzeugt.

18. Einrichtung nach Anspruch 17; die Heizungszone ist dabei mit einer Ablagerung eines elektrisch isolierenden Materials überzogen.

19. Einrichtung nach einem der Ansprüche 11 bis 16; dabei ist die Heizungszone strahlend, und die Schnittstelle der Heizungszone mit dem zu erwärmenden Material wird durch die Näherungsstellung der zu erwärmenden Materialien erzeugt.
